# EUROPEAN PATENT APPLICATION

(11) **EP 4 687 306 A1**
(43) Date of publication of application: **04.02.2026**
(21) Application number: 25191879.3
(22) Date of filing: 25.07.2025
(51) Int. Cl.: H04B 7/185

(54) **COMPUTER SYSTEM AND METHOD FOR VIRTUALIZING 5G SERVICES PROVIDED VIA SATELLITE**

(30) Priority: 02.08.2024 US 202463678611 P
(71) Applicant: MacDonald, Dettwiler and Associates Corporation, Ste-Anne-de-Bellevue, QC H9X 3R2 (CA)
(72) Inventor: Brown, Stephen, Sainte-Anne-de-Bellevue, Quebec, H9X 3R2 (CA)
(74) Representative: Grünecker Patent- und Rechtsanwälte PartG mbB

(57) **Abstract**

Computer systems and methods are provided for virtualizing 5G services provided via satellite. A computer system includes at least one processor and at least one non-transitory memory storing instructions for execution by the at least one processor to implement a scheduling function and a network operations function, the scheduling function and the network operations function being communicatively coupled via an interface. The scheduling function is configured to control the operation of an antenna to provide radio access network (RAN) coverage to a plurality of cells in a target area. The network operations function is configured to configure the RAN coverage to serve the plurality of cells defined by at least one mobile network according to a set of network-related parameters and a set of satellite-related parameters.

## Description

### Technical Field

The following relates generally to provision of telecommunications services, and more particularly to systems and methods for virtualizing 5G services provided via satellite.

### Introduction

Virtualized services are one means by which hardware elements of a physical device can be configured to perform a particular task in mobile and data networks.

Increasingly, data networks are evolving to utilize mobile network nodes, such as satellites. Satellite networks including, for example, low earth orbit (LEO) satellites, have been deployed and tested.

In such scenarios, the task of apportioning the capacity of a satellite amongst virtual operators according to predetermined factors or criteria, while also observing the various constraints (e.g., thermal, DC power, spectrum etc.) of the satellite, becomes a complex problem.

Accordingly, there is a need for an improved system and method for virtualizing mobile and data network services that overcomes at least some of the disadvantages of existing systems and methods.

This background information is provided to reveal information believed by the applicant to be of possible relevance to the present disclosure. No admission is necessarily intended, nor should be construed, that any of the preceding information constitutes prior art against the present disclosure.

### Summary

A system is provided. The system includes at least one processor and at least one non-transitory memory storing instructions for execution by the at least one processor to implement a scheduling function and a network operations function, the scheduling function and the network operations function being communicatively coupled via an interface. The scheduling function is configured to control the operation of an antenna to provide radio access network (RAN) coverage to a plurality of cells in a target area. The network operations function is configured to configure the RAN coverage to serve the plurality of cells defined by at least one mobile network according to a set of network-related parameters and a set of satellite-related parameters.

In an embodiment, the scheduling function is implemented at a satellite.

In an embodiment, the antenna is a multiband antenna.

In an embodiment, network-related parameters include at least one of: synchronization signal blocks (SSB); Physical Random Access Channel (PRACH); and intercell interference.

In an embodiment, satellite-related parameters include at least one of: duty cycling; thermal limitations; and power flux density (PFD).

In an embodiment, configuring the RAN coverage to serve the plurality of cells includes configuring at least one payload to serve the plurality of cells.

In an embodiment, the at least one payload controls at least one of: the operation of an antenna; and scheduling of a virtualized gNodeB-DU function.

In an embodiment, the at least one payload contains at least one of: a monitoring point; and a control point

In an embodiment, the scheduling function is part of a virtualized gNodeB-DU function.

In an embodiment, the scheduling function is separate from a virtualized gNodeB-DU function.

A method, performed by one or more electronic apparatuses in a network is provided. The method includes configuring radio access network (RAN) coverage to serve a plurality of cells in a target area, the plurality of cells defined by at least one mobile network according to a set of network-related parameters and a set of satellite-related parameters. The method further includes controlling the operation of an antenna to provide RAN coverage to the plurality of cells.

In an embodiment, controlling the operation of the antenna is performed by a scheduling function implemented at a satellite.

In an embodiment, configuring the RAN coverage is performed by a network operations function.

In an embodiment, the antenna is a multiband antenna.

In an embodiment, network-related parameters include at least one of: synchronization signal blocks (SSB); Physical Random Access Channel (PRACH); and intercell interference.

In an embodiment, satellite-related parameters include at least one of: DC power; thermal limitations; and power flux density (PFD).

In an embodiment, configuring the RAN coverage to serve the plurality of cells includes configuring at least one payload to serve the plurality of cells.

In an embodiment, the at least one payload controls at least one of: the operation of an antenna; and scheduling of a virtualized gNodeB-DU function.

In an embodiment, the scheduling function is part of a virtualized gNodeB-DU function.

In an embodiment, the scheduling function is separate from a virtualized gNodeB-DU function.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a system for virtualizing 5G services provided via satellite, according to an embodiment;
Figure 2 is a schematic diagram of a system for virtualizing 5G services provided via satellite, according to another embodiment;
Figure 3 is a flowchart of a method performed by one or more electronic apparatuses in a network, according to an embodiment;
Figure 4 is an apparatus for virtualizing 5G services provided via satellite, according to an embodiment;
Figure 5 is a schematic diagram of an electronic device, according to an embodiment;
Figure 6 is a schematic diagram of a system for virtualizing the transmit and receive sections of a multiband payload, according to an embodiment; and
Figure 7 is a map of cells based on the system of Figure 6, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

As used herein, the term "about" should be read as including variation from the nominal value, for example, a +/-10% variation from the nominal value. It is to be understood that such a variation is always included in a given value provided herein, whether or not it is specifically referred to.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present disclosure.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to provision of telecommunications services, and more particularly to systems and methods for virtualizing 5G services provided via satellite.

Satellites are anticipated to increasingly be used in the provision of data and mobile network services. Therefore, a problem to be solved is how to apportion the capacity of a satellite amongst virtual operators according to some commercial agreement, whilst observing the various constraints of the satellite (e.g., thermal, DC power, etc.).

The present disclosure relates to a satellite system, possibly operating in multiple non-contiguous frequency bands, incorporating a virtualized gNodeB-DU payload function that facilitates the provision of radio access network(s) and/or sharing of radio access networks through network slicing for a multiplicity of virtual operators. Such operators may include, for example, existing satellite operators with dedicated satellite spectrum, terrestrial operators wishing to provide satellite coverage for gaps in their terrestrial network, large corporations and other entities seeking to deploy global communications network to support their products and services (e.g., transport, mining, agriculture, consumer electronics etc.), and/or militaries and governments.

It should be noted that while certain aspects of the present disclosure are standard (e.g., gNodeB-DU and gNodeB-CU), novel aspects include an overall system that enables the use of standard components in a virtualized satellite system, and the payload and ground control functions that enable it.

An embodiment provides the means of sharing spectrum allocations and satellite and ground system capital and operational expenditure, thus helping to enable the business case for future constellations.

One use case of technologies disclosed herein is believed to be direct-to-device/loT at L- and S-bands in low Earth orbit. However, the concept would also extend to combinations of other frequency bands, recognizing that many operators have allocations in higher frequency bands (e.g., Kₐ-band) and that the corresponding antennas could be integrated on the large satellites needed to address lower frequency bands (as has been previously done in, e.g., Inmarsat GEO satellites).

In the case of disparate frequency bands, the user equipment may or may not be capable of connecting to multiple bands, depending on cost/service objectives. However, the concepts of sharing spacecraft and ground segment capex and opex still applies.

Advantageously, technologies disclosed herein may be, for example, integrated into satellite systems sold to end customers who partner with ground segment providers to implement the ground elements of the system, provided as a turn-key satellite system, operated as a satellite-as-a-service.

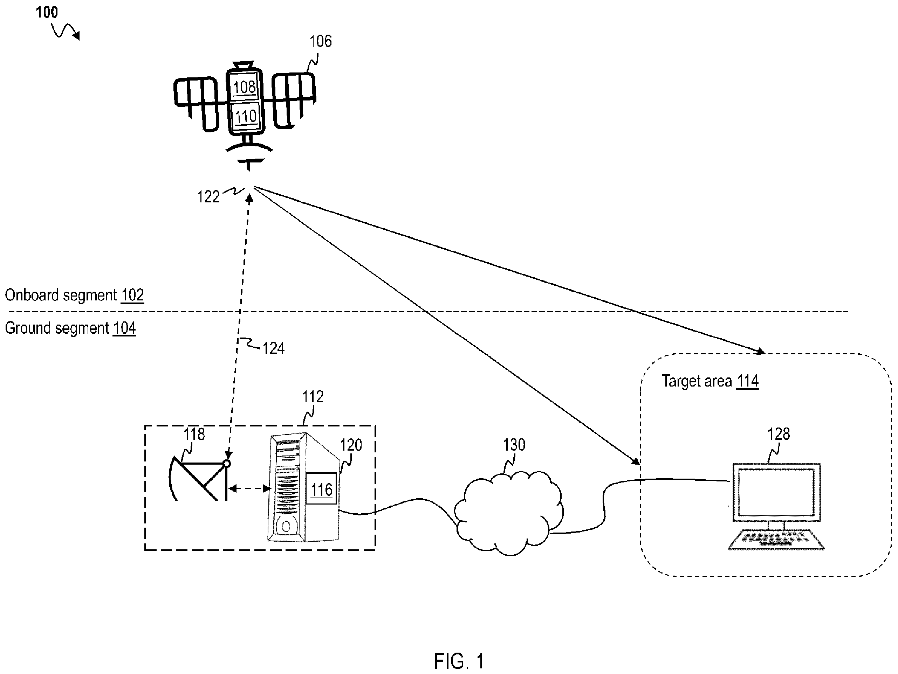

Referring now to Figure 1, shown therein is a system 100 for virtualizing 5G services provided via satellite, according to an embodiment.

The system 100 includes an onboard segment 102 and a ground segment 104.

The onboard segment 102 includes a network node 106. The network node 106 may be a spacecraft or a satellite, such as a low earth orbit (LEO) satellite.

The network node 106 also includes a scheduling function 108, onboard processor 110, and an antenna 122. The scheduling function 108 controls the operation of the potentially multiband antenna 122 and onboard processor 110 to deliver radio access networks (RAN) for a multiplicity of physical cells in a target area 114.

Scheduling of cells and users in the target area 114 is performed by the scheduling function 108 dynamically in time and frequency according to the operational constraints of the network node 106 (power (including antenna duty cycling), thermal limitations, power flux density (PFD), etc.), the operational constraints of a network (synchronization signal blocks (SSB), Physical Random Access Channel (PRACH), intercell interference, etc.), the prevailing traffic demand (SR/BSR on uplink and packet queues on downlink) shaped according to the overall quality of service (QoS) objectives assigned according to service/user/network slice/RAN.

The ground segment 104 includes a ground station 112.

The ground station 112 includes an antenna system 118 and a data processing device 120. The ground station 112 communicates with the network node 106 via the antenna system 118.

The data processing device 120 of the ground station 112 implements a network operations function 116 communicatively coupled to the scheduling function 108 that configures the RAN coverage to serve the cells in the target area 114 defined by the virtual operators' networks according to a set of network-related (e.g., QoS) and satellite-related (e.g., orbital average power) parameters that share the satellite service across multiple operators in an optimal manner.

The system 100 may utilize digital twins and an optimization algorithm to determine the future evolution of the system 100 according to needs expressed by the operations support system and business support system (OSS/BSS).

The network node 106 communicates with ground station 112 (or ground terminal) via uplink/downlink 124. The manner of communication is generally known. In other embodiments, there may be a plurality of ground stations 112 and the number of ground stations 112 is not particularly limited. The ground stations 112 may be located in multiple geographic locations.

The ground segment 104 further includes a user device 128. The user device 128 is configured to receive RAN coverage provided by the network node 106.

The user device 128 and the data processing device 120 may also communicate via a network 130. However, it should be noted that in a satellite service system, a user device typically may not be connected to the internet other than through the satellite. The network 130 may be a wide area network, such as the Internet. Communication in this context may include sending and receiving data. In this regard, the data processing device 120 may be able to monitor the quality of RAN coverage being provided to the user device 128 and use this information for adjustment purposes.

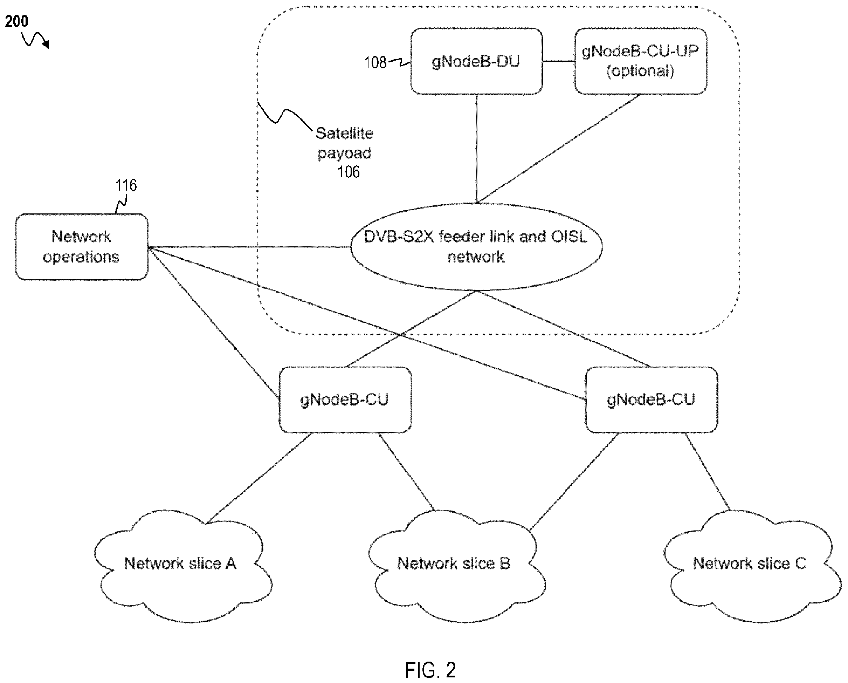

Referring now to Figure 2, shown therein is a system 200 based on the system of Figure 1, according to an embodiment.

Most components depicted in the system 200, such as the gNodeB-DU, gNodeB-CU and network slices, are all standard components of a 3GPP system. However, these standard components are not able to function in a virtualized satellite system. In order to enable the use of off-the-shelf components, special consideration of the payload 106 and network operations function 116 is required. These are the novel parts. The payload 106 contains a number of monitoring and control points that can be used to virtualize the capacity. The network operations function configures these parameters.

In some embodiments, a scheduling function may be part of a virtualized gNodeB-DU function 108, while in other embodiments (such as the depicted system 200) the scheduling function is not part of the gNodeB-DU function 108.

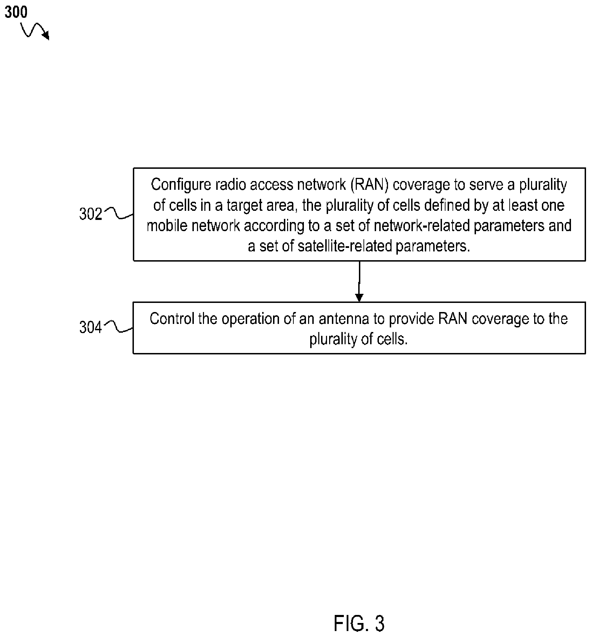

Referring now to Figure 3, shown therein is a method 300 performed by one or more electronic apparatuses in a network, according to an embodiment.

The method 300 may be encoded as computer-executable instructions and executed by one or more computing devices comprising one or more processors. In an embodiment, the method 300 may be executed by the data processing device 120 and network node 106 of Figure 1.

At 302, the method 300 includes configuring radio access network (RAN) coverage to serve a plurality of cells in a target area, the plurality of cells defined by at least one mobile network according to a set of network-related parameters and a set of satellite-related parameters.

At 304, the method 300 further includes controlling the operation of an antenna to provide RAN coverage to the plurality of cells.

In an embodiment, the network operations configure payload(s) to serve a plurality of cells defined by networks. The payload(s) then control(s) the operation of the antenna and the scheduling of the gNodeB-DU accordingly.

In an embodiment, controlling the operation of the antenna is performed by a scheduling function implemented at a satellite.

In an embodiment, configuring the RAN coverage is performed by a network operations function.

In an embodiment, the antenna is a multiband antenna.

In an embodiment, network-related parameters include at least one of synchronization signal blocks (SSB), Physical Random Access Channel (PRACH), and intercell interference.

In an embodiment, satellite-related parameters include at least one of DC power, thermal limitations, and power flux density (PFD).

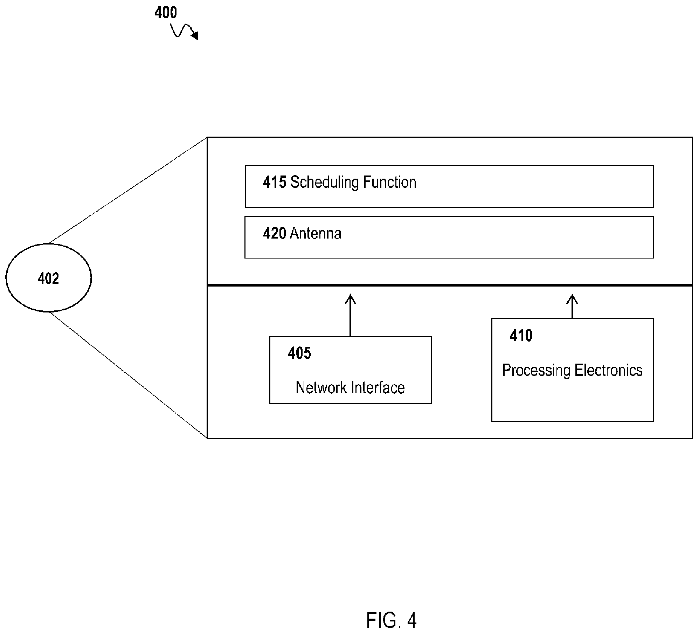

Referring now to Figure 4, shown therein is an apparatus 400 for virtualizing 5G services provided via satellite, according to an embodiment.

The apparatus is located at network node 402.

The apparatus includes a network interface 405 and processing electronics 410. The network interface 405 can be a single network interface or a combination of network interfaces (e.g., including a satellite-to-satellite communication interface and a satellite-to-ground communication interface). The network interface 405 can include an optical communication interface or radio communication interface, such as a transmitter and receiver.

The processing electronics 410 may include a computer processer executing program instructions stored in memory, or other electronics components such as digital circuitry, including for example FPGAs and ASICs.

The apparatus 400 may include several functional components, each of which is partially or fully implemented using the underlying network interface 405 and processing electronics 410.

Accordingly, the processing electronics 410 may be configured to implement a scheduling function 415 which, when configured, is configured to control the operation of an antenna 420 to provide radio access network (RAN) coverage to a plurality of cells in a target area.

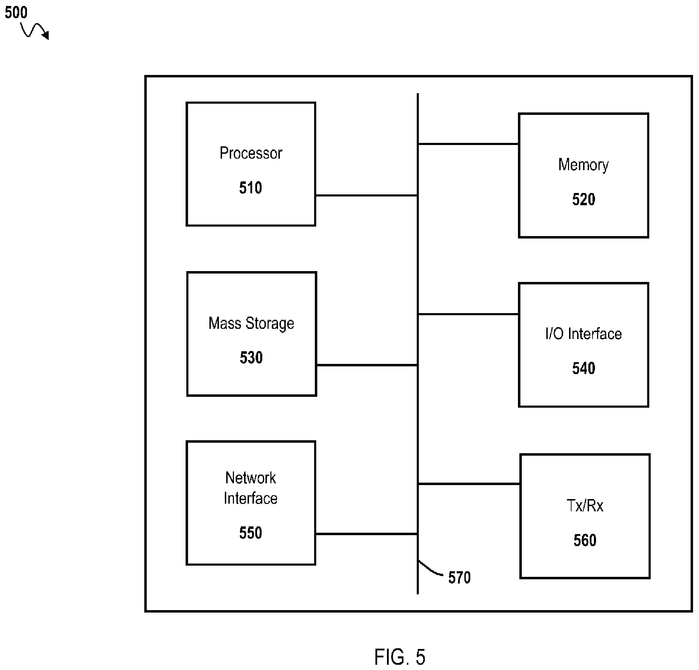

Referring now to Figure 5, shown therein is a schematic diagram of an electronic device 500 that may perform any or all of operations of the above methods and features explicitly or implicitly described herein, according to different embodiments of the present disclosure. For example, a computer equipped with network function may be configured as electronic device 500. The electronic device 500 may be used to implement the apparatus 400 of Figure 4, for example.

As shown, the device includes a processor 510, such as a Central Processing Unit (CPU) or specialized processors such as a Graphics Processing Unit (GPU) or other such processor unit, memory 520, non-transitory mass storage 530, I/O interface 540, network interface 550, and a transceiver 560, all of which are communicatively coupled via bi-directional bus 570. According to certain embodiments, any or all of the depicted elements may be utilized, or only a subset of the elements. Further, the device 500 may contain multiple instances of certain elements, such as multiple processors, memories, or transceivers. Also, elements of the hardware device may be directly coupled to other elements without the bi-directional bus. Additionally or alternatively to a processor and memory, other electronics, such as integrated circuits, may be employed for performing the required logical operations.

The memory 520 may include any type of non-transitory memory such as static random access memory (SRAM), dynamic random access memory (DRAM), synchronous DRAM (SDRAM), read-only memory (ROM), any combination of such, or the like. The mass storage element 530 may include any type of non-transitory storage device, such as a solid state drive, hard disk drive, a magnetic disk drive, an optical disk drive, USB drive, or any computer program product configured to store data and machine executable program code. According to certain embodiments, the memory 520 or mass storage 530 may have recorded thereon statements and instructions executable by the processor 510 for performing any of the aforementioned method operations described above.

Advantageously, a major use case of the 5G onboard processing (OBP) is part of a payload whereby multiple satellite operators share their spectrum, satellite, and possibly ground assets under some kind of commercial arrangement. The 5G OBP facilitates this business model by providing virtualization of the satellite and frequency resources within the operational constraints of the satellite system (e.g., satellite DC power, feeder link capacity) and according to the required service level (e.g., QoS).

The transmit section of the payload is where the primary advantages of virtualization are realized since it relates to downlink user spectrum and the majority of the payload power dissipation.

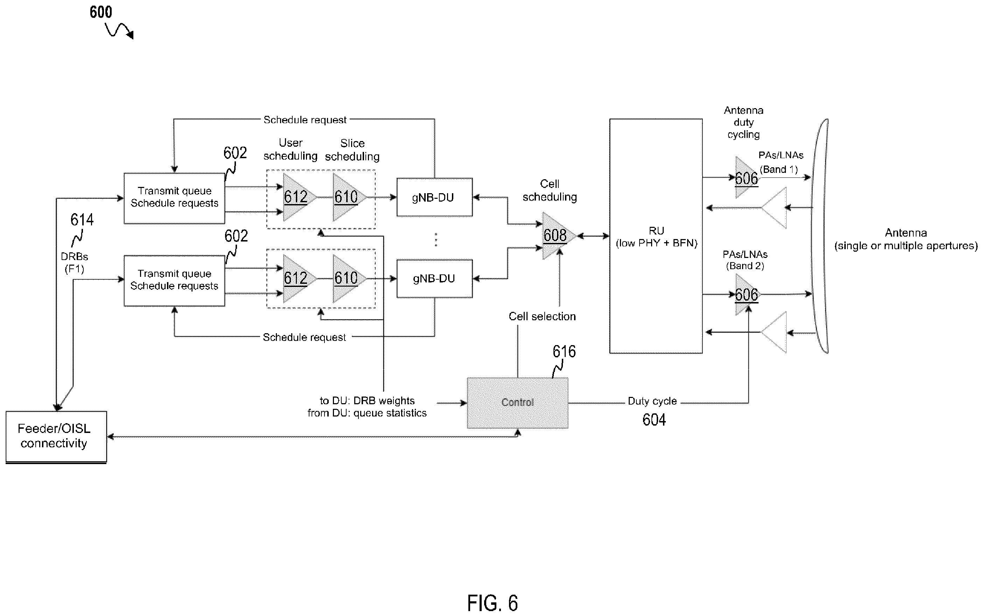

Referring now to Figure 6, shown therein is a schematic diagram of a system 600 for virtualizing the transmit and receive sections of a multiband payload, according to an embodiment. For the purposes of simplifying the discussion and to illustrate the general principles, it is assumed that transmit is decoupled from receive. Moreover, the subtleties of the operation of the various channels and their interactions, particularly Physical Downlink Control Channel (PDCCH) and Physical Uplink Control Channel (PUCCH), are ignored.

In essence, the receive path considerations are the same as those for the transmit path. However, the scheduling of satellite receive is to allocate time and frequency resources for user devices to transmit, as opposed to allocating time, frequency and power for the satellite to transmit.

Following the path of data from the transmit queue 602 (from the CU) through to free space there are four control points. Capacity is scheduled for the individual radio bearers according to the following process:

The antenna duty cycle control 604 determines whether the transmit antenna power amplifiers 606 are switched on during any slot (they may be powered on and off rapidly to reduce power consumption when the load is not 100%).

The cell scheduler 608 determines which cells should be illuminated on any given active antenna cycle according to a set of cell weights that determine dynamically the capacity per cell and static configuration for regular transmissions (e.g., SSB).

A network slice scheduler 610 that, according to a set of network slice weights per cell, divides the cell capacity amongst its network slices.

A user scheduler 612 that, according to a set of radio bearer weights, allocates the slice capacity amongst its radio bearers 614.

This process can be thought of as occurring in reverse to the flow of data: the antenna duty cycle control 604 provides capacity for the cell scheduler, which provides cell capacity to the network slice scheduler 610, which provides network slice capacity to groups of radio bearers 614.

The cell scheduler 608, network slice scheduler 610 and user scheduler 612 may be based on generalized resource sharing algorithms such as deficit round robin or weighted fair queueing. These divide the capacity at each stage according to a set of weights that are configured by a ground control system 616. The payload provides accounting functions that keep track of what is actually scheduled and reports this to the ground. This allows the network operations center to monitor how the usage of individual networks in the virtualized system. This telemetry may be used to dynamically adjust the weights, e.g., on the basis of a particular slice's usage.

In addition to resource sharing, it is the cell scheduler's 608 responsibility to ensure that inter-cell interference is well controlled. Each cell is assigned a set of useable frequency resources. Ideally, this would not be constrained to provide maximum flexibility in the system. There are some considerations, however, that may limit this such as inter-satellite interference, which occurs at the edge of coverage and may be difficult to coordinate in time due to the geometry of the system.

To manage intra-satellite interference dynamically, cells may be scheduled in the order determined by the general resource sharing algorithm, but cells are skipped if their addition to the schedule would cause an unacceptable impairment to higher priority cells or, conversely, if higher priority cells would cause unacceptable interference to them. As a result of this process, the C/I for a given cell may not be easily determinable other than to say it is better than a programmable threshold. Therefore, it may be desirable for the payload to optimize the modulation and coding scheme according to the prevailing C/I for the arrangement of cells scheduled. This can be done by an appropriate modification to the MCS encoded in the DCI scheduling the downlink transmission.

The antenna duty cycling function provides a control point to manage antenna power dissipation. The network operations center knows the capacity demands of the system and maintains a plan of how this will be served by the satellites in the system. This is accomplished by an optimization algorithm that makes use of digital twins of each satellite. A digital twin provides the means of modelling and predicting the future state of the satellite and its capacity to serve traffic, particularly with respect to power and thermal management. (Each satellite may be capable of generating more RF power than can be sustained over the entire orbit.) The primary objective of this management is to control transmit antenna power dissipation, but other resources (processing elements, feeder link, optical intersatellite links, etc.) also contribute to the power budget and are managed accordingly. Power saving on the receive antenna may also be possible if the LNAs may be duty cycled, but these typically use less power than the power amplifiers. It should be noted that the digital twins would be accommodated in the network operations center.

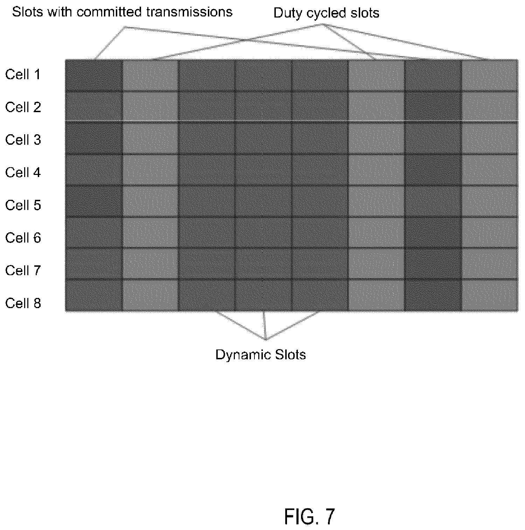

The network operations center provides the payload with a threshold for average antenna duty cycle that should not be exceeded. This value is selected by the network operations center to provide sufficient headroom for future operations for the duration of time ahead that it models. The payload duty cycles the antenna on a slot-to-slot basis (as a minimum) to ensure that this threshold is not exceeded according to a fixed set of committed transmissions and a dynamic set of transmissions whose activity is determined by the prevailing traffic (see Figure 7). It may be desirable to schedule at a granularity finer than one slot-e.g., half a slot-if power efficiency considerations require it. (A use case for this might be transmitting SSB to a large number of cells with little or no traffic.)

Committed transmissions include, as a minimum, SSB, which must be transmitted regularly on all active cells. Committed transmissions also might include parts of PDCCH not associated with dynamic scheduling. The antenna will be active during any slot with committed transmissions. During such cycles, there is likely to be sufficient power available
Dynamic scheduling includes PDSCH and PDCCH occasions that user equipment (UEs) monitor for the purpose of receiving downlink control information (DCls) that schedule the uplink or downlink. For slots without committed transmissions, the payload makes a decision whether to activate the antenna based upon the available traffic to send. Essentially, this is a trade-off between latency and power efficiency subject to the aforementioned upper limit on duty cycle. It is desirable for the payload to activate the antenna only if certain criteria are met for the cells to be scheduled, such as exceeding a latency threshold to maintain quality of service; exceeding a queue fill level to maintain power efficiency (i.e., there is enough data to send to be worth turning on the antenna).

While the above description provides examples of one or more apparatus, methods, or systems, it will be appreciated that other apparatus, methods, or systems may be within the scope of the claims as interpreted by one of skill in the art. Elements of each embodiment may be incorporated into other embodiments, for example, configurations discussed in relation to one embodiment, may be applied to other embodiments disclosed herein. Further, it is evident that various modifications and combinations can be made without departing from the invention. The specification and drawings are, accordingly, to be regarded simply as an illustration of the invention as defined by the claims, and are contemplated to cover any and all modifications, variations, combinations or equivalents that fall within the scope of the present disclosure.

## Claims

1. A system comprising at least one processor and at least one non-transitory memory storing instructions for execution by the at least one processor to implement a scheduling function and a network operations function, the scheduling function and the network operations function being communicatively coupled via an interface, wherein the scheduling function is configured to:
control the operation of an antenna to provide radio access network (RAN) coverage to a plurality of cells in a target area;
and wherein the network operations function is configured to:
configure the RAN coverage to serve the plurality of cells defined by at least one mobile network according to a set of network-related parameters and a set of satellite-related parameters.

2. The system of claim 1, wherein the scheduling function is implemented at a satellite.

3. The system of claim 1, wherein the antenna is a multiband antenna.

4. The system of claim 1, wherein network-related parameters include at least one of: synchronization signal blocks (SSB); Physical Random Access Channel (PRACH); and intercell interference.

5. The system of claim 1, wherein satellite-related parameters include at least one of: duty cycling; thermal limitations; and power flux density (PFD).

6. The system of claim 1, wherein configuring the RAN coverage to serve the plurality of cells includes configuring at least one payload to serve the plurality of cells.

7. The system of claim 6, wherein the at least one payload controls at least one of: the operation of an antenna; and scheduling of a virtualized gNodeB-DU function.

8. The system of claim 6, wherein the at least one payload contains at least one of: a monitoring point; and a control point.

9. The system of claim 1, wherein the scheduling function is part of a virtualized gNodeB-DU function.

10. The system of claim 1, wherein the scheduling function is separate from a virtualized gNodeB-DU function.

11. A method, performed by one or more electronic apparatuses in a network, the method comprising:
configuring radio access network (RAN) coverage to serve a plurality of cells in a target area, the plurality of cells defined by at least one mobile network according to a set of network-related parameters and a set of satellite-related parameters; and
controlling the operation of an antenna to provide RAN coverage to the plurality of cells.

12. The method of claim 11, wherein configuring the RAN coverage is performed by a network operations function.

13. The method of claim 11, wherein the antenna is a multiband antenna.

14. The method of claim 11, wherein network-related parameters include at least one of: synchronization signal blocks (SSB); Physical Random Access Channel (PRACH); and intercell interference.

15. The method of claim 11, wherein satellite-related parameters include at least one of: DC power; thermal limitations; and power flux density (PFD).
